# EUROPÄISCHE PATENTSCHRIFT

(11) **EP 1 970 679 B1**
(45) Veröffentlichungstag und Bekanntmachung des Hinweises auf die Patenterteilung: **29.04.2015**
(21) Anmeldenummer: 08004581.8
(22) Anmeldetag: 12.03.2008
(51) Int. Cl.: G01F 13/00, F16K 1/22

(54) **Entleerstation für Schüttgut-Container mit zugehörigem Schüttgut-Container und Verfahren zur kontrollierten Entleerung von Schüttgut-Containern**
Emptying station for bulk material containers with accompanying bulk material container and method for controlled emptying of bulk material containers
Station de vidage pour conteneur de produits en vrac dotée d'un conteneur de produits en vrac correspondant et procédé de vidage contrôlé de conteneurs de produits en vrac

(30) Priorität: 14.03.2007 DE 102007013093
(43) Veröffentlichungstag der Anmeldung: 17.09.2008
(73) Patentinhaber: UCON AG Containersysteme KG, 77756 Hausach (DE)
(72) Erfinder: Fuchs, Werner, 77716 Haslach (DE); Rehm, Reiner, 77709 Wolfach (DE); Selinger, Markus, 77736 Zell am Harmersbach (DE)
(74) Vertreter: Westphal, Mussgnug & Partner Patentanwälte mbB

(56) Entgegenhaltungen:
- WO-A1-01/75342
- WO-A1-90/08724
- DE-A1-102004 036 273
- FR-A1- 2 872 067
- GB-A- 1 473 408
- GB-A- 2 329 178

## Beschreibung

Die Erfindung betrifft eine Entleerstation für Schüttgut-Container gemäß dem Oberbegriff des Patentanspruchs 1 und ein Verfahren zur Entleerung von Schüttgut-Containern mit einer solchen Entleerstation gemäß dem Oberbegriff des Patentanspruchs 13.

Eine Vielzahl unterschiedlichster Substanzen wird im Warenverkehr als Schüttgut transportiert. In der Regel werden die Güter dazu in Schüttgut-Container abgefüllt, die vom Hersteller oder Zwischenhändler zum jeweiligen Empfänger transportiert werden.

Es ist allerdings eher die Ausnahme als die Regel, dass bei der Anlieferung oder auch bei der Verwendung des jeweiligen Schüttgutes bei seinem Verarbeiter stets nur komplette Schüttgut-Container auf einmal ausgeliefert oder verbraucht werden. Daher ist es in den meisten Fällen notwendig, Entleerstationen für Schüttgut-Container vorzusehen, welche die gezielte Entnahme einer kontrolliert dosierten Menge von Material ermöglichen.

Bei einer solchen Entleerstation wird in der Regel ein das Schüttgut enthaltender Schüttgut-Container auf eine meist ortsfeste Entladestation aufgesetzt.

Eine besondere Herausforderung stellt es dabei dar, das Schüttgut gezielt und präzise zu dosieren, wobei es insbesondere nicht zu einem Überschießen von Material, also einer Überdosierung, kommen sollte. Dies lässt sich durch eine bloße Kontrolle über den aktuellen Öffnungsgrad des Verschlusses des Schüttgut-Containers bei vielen Materialien nicht effektiv erreichen, weil bei kleinen Verschlussöffnungen, wie sie zumindest zur abschließenden Feindosierung des Materials notwendig sind, die Öffnungen durch Brückenbildung zwischen Körnern des Schüttgutes verstopft werden und der geregelte Durchfluss nicht mehr möglich ist.

Es ist eine Reihe von unterschiedlichen Möglichkeiten bekannt, dennoch eine Feindosierung zu erzielen, etwa durch Verwendung von Dosierschiebern und Dosierschnecken. Beispielsweise lehrt die DE 296 08 490 U1 eine zu diesem Zweck optimierte Dosierschnecke.

Oftmals werden Entleerstationen gerade wegen der Notwendigkeit, aufwändige und hochpräzise Dosiereinrichtungen vorzusehen, nicht nur für eine einzige Art von Schüttgut genutzt. Das führt zu der Problematik, dass die Dosiereinrichtung nach der Verwendung sorgfältig gereinigt werden muss.

Eine weitere Ausführungsform einer Dosiereinrichtung ist eine steuerbare Dosierklappe, deren Öffnungsspalt kontrolliert verstellt werden kann, um durch Variation seiner Größe den Durchfluss anzupassen. Solche Dosierklappen können direkt am Schüttgut-Container angebracht werden, was dann die aufwändige Reinigung eines komplizierten Dosiermechanismus an der Entleerstation unnötig macht. Problematisch ist dabei aber das bereits oben erwähnte Verstopfen der Spalte, das bei den zur Feindosierung unabdingbaren kleinen Öffnungswinkeln der Dosierklappen ein notorisches Problem darstellt.

Als Lösungsansatz ist es bekannt, einen Rüttelmechanismus an der Entleerstation vorzusehen, mit dem der gesamte Schüttgut-Container gerüttelt wird und so gegebenenfalls die Brückenbildung gebrochen werden kann. Dieses Vorgehen führt jedoch oftmals nicht zu befriedigenden Resultaten, weil durch das Rütteln in vielen Fällen ein unkontrollierter Durchschuss von Schüttgut hervorgerufen wird, der zu Überdosierungen führt.

Ein alternativer Lösungsansatz ist aus der EP 0837 013 A1 bekannt. Dort wird gelehrt, die Dosierklappe durch Beaufschlagung der Klappenscheibe mit Druckluft oder Unterdruck, also an der Klappenscheibe selbst in Vibrationen zu versetzen. Dieser Ansatz ist aber mit hohem Kostenaufwand verbunden, denn jeder einzelne Schüttgutcontainer muss mit einer entsprechenden pneumatischen Vibrationsanordnung versehen werden.

Eine andere Umsetzung des Prinzips, Behinderungen des Pulverdurchsatzes durch Vibrationen aufzulösen, nämlich durch Anordnung eines pneumatischen Vibrationsmechanismus direkt auf der Klappenscheibe der Dosierklappe oder an deren Lagerachsen, ist der WO 01/75342 zu entnehmen. Auch hier ist aber derselbe hohe Kostenaufwand wie bei der vorstehend genannten Lösung festzustellen, denn jeder einzelne Schüttgutcontainer muss mit entsprechenden pneumatischen Anordnungen versehen werden.

Ein weiterer Nachteil der beiden vorstehend genannten Anordnungen besteht darin, dass Antriebselemente für die Klappe und/oder deren Vibration im Schüttgutstrom angeordnet sind, was deren Lebensdauer erheblich reduziert.

Aus der DE 10 2004 036 273 A1 ist eine Verschluss- und Entnahmeeinrichtung bekannt, die an einem Silo oder Schüttgut-Container angeordnet ist, der einen Materialaufnahmebehälter mit Befüllöffnung und eine Klappe umfasst, wobei die Klappe mit einer Antriebseinheit versehen ist und durch eine Steuerelektronik zur Steuerung der Antriebseinheit, die in Signalkommunikation mit der Antriebseinheit der Klappe steht, aufweist, wobei die Antriebseinheit von der Klappe abgekoppelt werden kann.

Aus der GB 2 329 178 ist eine Entleerstation für Schüttgut-Container und ein zugehöriger Schüttgut-Container bekannt, wobei der Schüttgut-Container einen Materialaufnahmebehälter mit Füllöffnung und einem Schieber umfasst, wobei ferner eine Antriebseinheit für den Schieber vorgesehen ist und die Entleerstation eine Steuerelektronik zur Steuerung der Antriebseinheit aufweist, wobei die Steuerelektronik in Signalkommunikation mit der Antriebseinheit steht.

Weitere Dosiervorrichtungen für Container sind bspw. aus der WO 90/08724, der GB 1 473 408 und der FR 2 872 067 bekannt.

Die Aufgabe der Erfindung besteht darin, ein Verfahren und eine Vorrichtung bereitzustellen, die einerseits eine Dosierung des Schüttgutes erlauben, aber andererseits die aufwändige Reinigung der Dosiervorrichtung im Falle einer ortsfesten Dosiervorrichtung bzw. das Vorsehen von teuren und komplexen Dosiervorrichtungen an jedem einzelnen Schüttgutcontainer zu vermeiden.

Die Aufgabe wird gelöst durch eine Entleerstation für Schüttgut-Container mit zugehörigem Schüttgut-Container mit den Merkmalen des Patentanspruchs 1 und ein Verfahren zur kontrollierten Entleerung von Schüttgut-Containern mit den Merkmalen des Patentanspruchs 13.

Vorteilhafte Ausgestaltungen und Weiterbildungen der Erfindung sind in den Unteransprüchen angegeben.

Der Erfindung liegt die Erkenntnis zugrunde, dass es möglich ist, die Dosierklappe am Schüttgut-Container, die Steuerelektronik und den Antrieb für die Dosierklappe jedoch an der Dosierstation vorzusehen und nur während des Entleervorgangs mit dem Schüttgut-Container zu verbinden.

Das erfindungsgemäße System besteht dementsprechend einerseits aus einem Schüttgut-Container mit zumindest einem Materialaufnahmebehälter mit Befüllöffnung und Dosierklappe und andererseits aus einer Entleerstation, umfassend mindestens den Klappenantrieb und eine Steuerelektronik zur Steuerung des Klappenantriebs.

Die erfindungsgemäßen Schüttgut-Container sind also mit einer Klappenscheibe der Dosierklappe verschlossen, die sich nach dem Aufsetzen des Schüttgut-Containers auf die Entleerstation in geschlossenem Zustand in einer horizontalen Position befindet. Wird die Klappenscheibe durch Rotation um eine mit einem Scheibendurchmesser zusammenfallende Achse geöffnet, so entsteht zwischen ihr und der Dichtmanschette der Dosierklappe ein sichelförmiger Spalt, was wegen des bereits erwähnten horizontalen Einbaus zu einem gravimetrischen Produktfluss nach unten führt, der durch Variation des auch als "Klappenwinkel" bezeichneten Öffnungswinkels und damit der Spaltgröße variiert werden kann. Die zum Öffnen und Schließen der Dosierklappe verwendete Antriebseinheit ist dabei nicht am Schüttgut-Container, sondern an der Entleerstation vorgesehen. An der Entleerstation ist ein Schienensystem vorgesehen, auf dem ein Schlitten verschiebbar angeordnet ist, wobei der Schlitten zumindest die Antriebseinheit und eine Kupplungseinheit trägt und so verschoben werden kann, dass die Kupplungseinheit eine Antriebsachse der Dosierklappe mit der Antriebseinheit verbindet.

In einer besonders bevorzugten Weiterbildung der Erfindung ist an der Entleerstation zusätzlich eine Vorrichtung vorgesehen, mittels derer die Klappenscheibe in Vibration versetzt werden kann. Prinzipiell ist allerdings auch möglich, die Vorrichtung am Schüttgut-Container vorzusehen, was aber dann wieder die Notwendigkeit mit sich bringt, jeden einzelnen Schüttgut-Container damit zu versehen.
Durch diesen Vibrator können Probleme z.B. mit schlecht fließenden Schüttgütern oder mit Schüttgütern mit großer Korngröße, welche wegen der Brückenbildung nicht abfließen, vermieden werden. An der Dosierklappe werden die Schwingungen des angebauten Vibrators auf die Klappenscheibe übertragen. Die Schwingungen lockern (fluidisieren) das anstehende Schüttgut auf der Kontaktfläche auf und fördern das Produkt an den Rand der Klappenscheibe bzw. lösen am entstehenden Spalt das angestaute Produkt.

Schon bei einem sehr geringen Öffnungswinkel der Klappenscheibe wird das Schüttgut durch die Schwingungen an die Kante der Scheibe gefördert und lässt sich ebenso wie das angestaute Produkt gezielt austragen. Somit wird auch ein "Verbacken" des Schüttguts zwischen der unteren Kante der Klappenscheibe und der Dichtmanschette verhindert.

Durch den Einsatz der oben beschriebenen Vibrationsfunktion wird das Schüttgut am Rand der Klappenscheibe aufgelockert (fluidisiert) und die Brücken gebrochen; somit kann es in sehr geringen Mengen ausgetragen werden (Kleinstmengendosierung).

Als eine besonders vorteilhafte Ausgestaltung des Vibrationsmechanismus hat sich bewährt, die Schwingungen mit Hilfe eines Kugelvibrators zu induzieren.

Die Schwingungsfrequenz des Kugelvibrators liegt bevorzugt zwischen 80 und 500 Hz, höchst bevorzugt ist eine Frequenz von 350 Hz.

In einer besonders bevorzugten Ausführungsform ist der Kugelvibrator mittels einer lösbaren Verbindung, beispielsweise durch Verschraubung, Steckverschluss oder eine geeignete Bajonettverschluss-Anordnung an einer der Wellen befestigt und hat keinen festen Kontakt zum Gehäuse. Der Kugelvibrator dreht sich also mit der Klappenscheibe mit, wenn der Öffnungswinkel der Dosierklappe verändert wird. Diese Anordnung führt auch zu einer weitgehenden Schwingungsentkopplung, die Vibrationen des Kugelvibrators werden also nur stark gedämpft auf die Anlage übertragen.

Vorteilhafterweise ist an der Entleereinrichtung weiter eine Steuerelektronik vorgesehen, welche nicht nur die Ansteuerung des Klappenantriebs durchführt, sondern auch das mittels einer zur Überwachung des Abfüllvorgangs vorgesehenen, der Entleerstation zugeordneten Waage ausgelesene Gewicht des bereits abgefüllten Materials als Eingangssignal zugeführt bekommt und dieses Signal zur Steuerung der Einstellung der Dosierklappe verwendet.

Um die aktuelle Stellung der Klappenscheibe der Dosierklappe sicher bestimmen zu können, ist die Verwendung eines Weggebers vorteilhaft.

Der Weggeber ist in einer besonders vorteilhaften Ausführungsform am Stellmechanismus, also am Antrieb der Klappenscheibe angeordnet, er kann aber abweichend auch der Klappenscheibe selbst vorgesehen sein.

Besonders bei der Abfüllung schlecht fließender Produkte kann weiterhin an der Entleerstation ein Containerrüttler vorgesehen sein. Dieser arbeitet im Puls-Pause-Betrieb und kann im Automatikbetrieb bei einer unerwarteten Durchflussreduktion, die nicht mit einer Änderung der Dosierklappenöffnung einhergeht, durch die Steuerelektronik aktiviert werden.

Eine bevorzugte Ausführungsform des erfindungsgemäßen Schüttgut-Containers sieht vor, dass mittels eines Gerüstes das Aufsetzen des Materialaufnahmebehälters stabilisiert wird. Besonders vorteilhaft ist es, den unteren Abschnitt des Gerüstes so an die Form der Oberseite der Entleerstation anzupassen, dass das Aufsetzen des Schüttgut-Containers passgenau erfolgt. Denkbar ist auch, automatisch eine definierte Ausrichtung zu erzwingen und Möglichkeiten zum Einrasten der entsprechenden Verbindung vorzusehen.

Bei einem derart ausgestalteten Container ist es sinnvoll, auch den oberen Abschnitt des Gerüstes zu modifizieren, und zwar dergestalt, dass er dem oberen Abschnitt einer Entleerstation gleich ausgeformt ist. Bei dieser Ausgestaltung wird dann ein besonders gutes Stapelverhalten der Schüttgut-Container erreicht.

Das erfindungsgemäße Verfahren zur kontrollierten Entleerung von Schüttgut-Containern hebt sich dadurch von bekannten Abfüllverfahren ab, dass zusätzlich mindestens die Schritte des Verbindens und Lösens der Antriebseinheit von der Dosierklappe notwendig sind.

Vorteilhaft ist es, wenn zusätzlich zumindest während eines Teils des Entleervorgangs die Dosierklappe in Vibration versetzt wird.

Weitere vorteilhafte Ausführungsformen des Verfahrens betreffen vor allem eine unterschiedliche Betriebsweise der Steuerelektronik in mehreren Phasen des Abfüllprozesses, insbesondere die Überwachung materialabhängiger Dosierparameter, die z.B. durch ein Operator Panel vorgegeben sind, durch die Steuerelektronik während des Entleerungsvorgangs.

Insbesondere sind hier neben der Überwachung des Sollgewichtes die Überwachung mindestens eines Solldurchsatzes von Material zu nennen. Die Steuerelektronik ist vorteilhafterweise so ausgelegt, dass sie bei einem Unterschreiten des Solldurchsatzes die Öffnung der Dosierklappe vergrößert und bei Überschreiten des Solldurchsatzes die Öffnung der Dosierklappe verkleinert

Es hat sich als überaus positiv zur Reduktion des Zeitbedarfs für das Abfüllen erwiesen, dass die Steuerelektronik beim Abfüllen bis zum Erreichen eines materialabhängig vorgegebenen Grobstromendgewichtes zunächst in einem Grobstrommodus arbeitet, in dem der Durchfluss von Material, also der Grobstromdurchsatz, einen vorgebbaren hohen Wert erreicht. Eine optimale Reduktion des Zeitbedarfs kann dabei erzielt werden, wenn beim erstmaligen Öffnen der Dosierklappe zu Beginn des Abfüllvorgangs ein Anfangshub der Klappe vorgesehen ist und diese nicht - wie sonst im Normalbetrieb - durch Vergleich einer aktuellen Durchflussrate mit einer Zieldurchflussrate rückgekoppelt an die Sollposition gefahren wird.

Sobald ein der Steuerelektronik - beispielsweise mittels des Operator Panels - vorgebbares Grobstromendgewicht, das von Material zu Material unterschiedlich sein kann, erreicht ist, wird die Dosierklappe so linear in einen Feinstrombetrieb überführt, in dem nur noch ein als Dosierparameter vorgegebener geringer Materialdurchsatz, der Feinstromdurchsatz, erfolgt, dass der Feinstrombetrieb beim Erreichen des Feinstromanfangsgewichtes erreicht ist. In diesem Feinstrombetrieb wird das System weiterbetrieben, bis das Sollgewicht erreicht ist.

Die einzelnen Dosierphasen können auch ohne Errechnen eines Materialdurchsatzes für eine für jede Phase fix eingestellte Klappenöffnung gesteuert werden.

Die Präzision, mit der das angestrebte Sollgewicht getroffen wird, kann insbesondere erhöht werden, wenn weiterhin eine untere und eine obere Toleranzschwelle für das Sollgewicht der Steuerelektronik vorgegeben werden können. Auch diese können vom Material abhängig sein und beispielsweise über das Operator Panel eingegeben werden. Sobald die untere Toleranzschwelle erreicht wird, wird der Materialdurchsatz gestoppt, so dass die Waage sich beruhigen kann.

Die Erfindung wird anhand der nachfolgenden Figuren, die eine spezielle Ausführungsform der Erfindung darstellen, ausführlich erläutert. Es zeigt
- Fig. 1:: eine Ausführungsform eines erfindungsgemäßen Schüttgut-Containers.
- Fig. 2a:: eine Aufsicht auf die am Schüttgutcontainer vorgesehenen Dosierklappe.
- Fig. 2b:: eine Detailansicht des Kugelvibrators und eines möglichen Befestigungsmechanismus für den Kugelvibrator an der Klappenscheibe.
- Fig. 2c:: eine Detailansicht des durch die Dichtmanschette der Dosierklappe durchgeführten Kugelvibrators im an der Klappenscheibe befestigten Zustand.
- Fig. 3:: eine Detailansicht eines Übergangsstücks, wie es an der erfindungsgemäßen Entleerstation zur Aufnahme des erfindungsgemäßen Schüttgut-Containers vorgesehen ist, mit aufgesetztem, am nicht dargestellten Container befestigtem Dichtring.
- Fig. 4:: exemplarisch den Verlauf des erfindungsgemäßen Dosierverfahrens als Flussdiagramm.
- Fig. 5:: den Verlauf des Dosiervorgangs, wie er bei Anwendung des erfindungsgemäßen Dosierverfahrens auftritt, in Form eines Diagramms, in dem das Dosiergewicht gegen die Zeit aufgetragen ist.

Gleiche Bauteile wurden in allen Figuren mit demselben Bezugszeichen versehen.

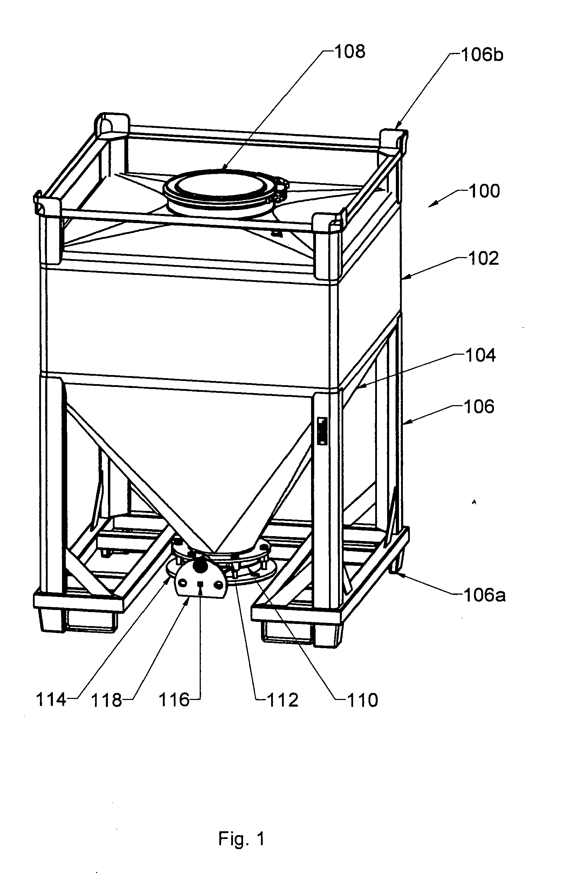

Figur 1 zeigt eine Ausführungsform eines erfindungsgemäßen Schüttgut-Container 100 mit einem Materialaufnahmebehälter 102. Um eine vollständige Entleerung des Materialaufnahmebehälters 102 zu erleichtern ist es vorteilhaft, den unteren Teil Materialaufnahmebehälters 102 mit trichterartig auf die Auslassöffnung zulaufenden Wänden 104 zu gestalten.

Bei dieser Ausführungsform ist zur Stabilisierung des Materialaufnahmebehälters 102 auf der Entleerstation ein Gerüst 106 vorgesehen, das den Materialaufahmebehälter 102 umschließt. Vorteilhafterweise wird der untere Abschnitt des Gerüstes 106a so ausgestaltet sein, dass er in eindeutiger Weise auf dem Oberteil der Entleerstation einrasten kann. Sinnvoll ist weiter, dass der obere Abschnitt des Gerüstes 106b ebenfalls das Einrasten des unteren Abschnitts 106a eines weiteren erfindungsgemäßen Schüttgut-Containers 100 erlaubt, da dadurch das sichere Stapeln solcher Schüttgut-Container 100 entschieden vereinfacht wird.

Weiter befinden sich am Materialaufnahmebehälter 102 eine Befüllöffnung 108 und eine weitere, in Figur 1 mit der Dosierklappe 110 verschlossene Öffnung zum Entleeren. Die Dosierklappe 110 ist mittels eines Ringflansches 112 am Materialaufnahmebehälter befestigt; unterhalb der Dosierklappe 110 ist ein zweiter Ringflansch 114 angebracht, mit dem ein flächig schlüssiger Kontakt zu einem nicht dargestellten Gegenflansch der Entleerstation herstellbar ist. Die Antriebsachse 116, mit der die Klappenscheibe der Dosierklappe 110 in unterschiedliche Positionen verbracht werden kann sowie das sie umschließende Anschlusselement 118 zeigen in dieser Figur auf den Betrachter zu.

Es wird in diesem Zusammenhang insbesondere auf das erfindungswesentliche Merkmal hingewiesen, dass die am Schüttgut-Container 100 befindliche Dosierklappe keine Antriebseinheit aufweist. Diese ist an der Entleerstation vorgesehen und wird, wie nachfolgend beschrieben, erst mit dem aufgesetzten Schüttgut-Container 100 in Verbindung gebracht.

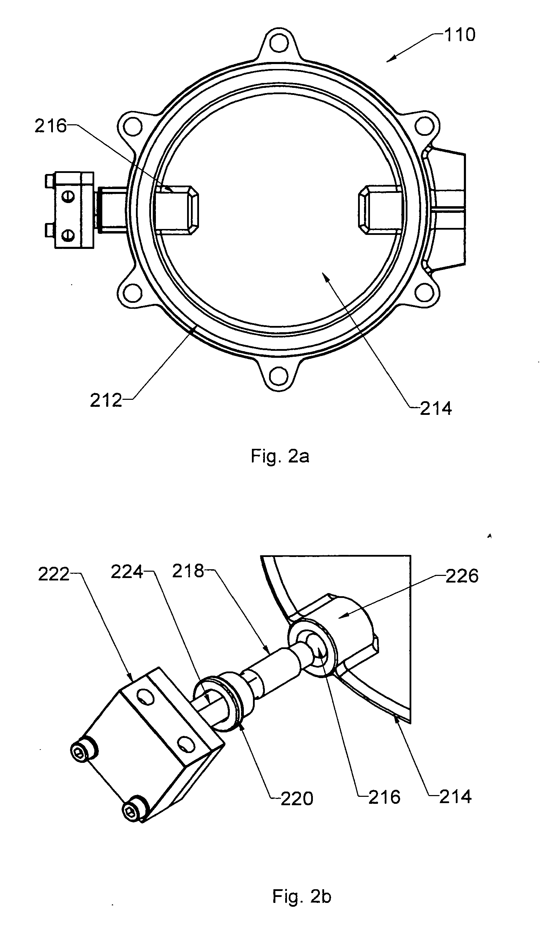

Figur 2a zeigt eine Aufsicht auf die Dosierklappe 110, in der deutlich der Dichtring 212 und die Klappenscheibe 214 mit den Wellen der Klappenscheibe 226 zu erkennen sind.

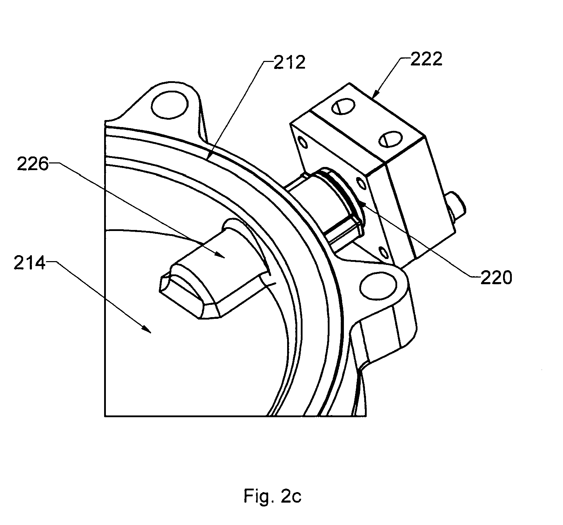

Figur 2b stellt eine Detailansicht eines vorgesehenen Vibrationsmechanismus dar. Der in diesem Ausführungsbeispiel vorgesehene Kugelvibrator 222 ist auf einer Verbindungsachse 224 angeordnet, die mittels des Gewindes 218 und eines Gegengewindes 216 , das in der Welle der Klappenscheibe 226 angeordnet ist, an dieser befestigt ist. Bei Rotation der Klappenscheibe 214 dreht sich der Kugelvibrator 222 mit. Zur Verbindung mit dem in Figur 2b nicht dargestellten Dichtring 212 ist die aufgesteckte Durchführung 220 mit Gewinde und vorspringendem Kragen vorgesehen, die mit dem Dichtring 212 wie in Figur 2c skizziert verschraubt werden kann. Vorteilhaft ist es dabei, die Durchführung 220 von der durch den Kugelvibrator 222 in Vibration versetze Verbindungsachse 224 schwingungsmäßig zu isolieren.

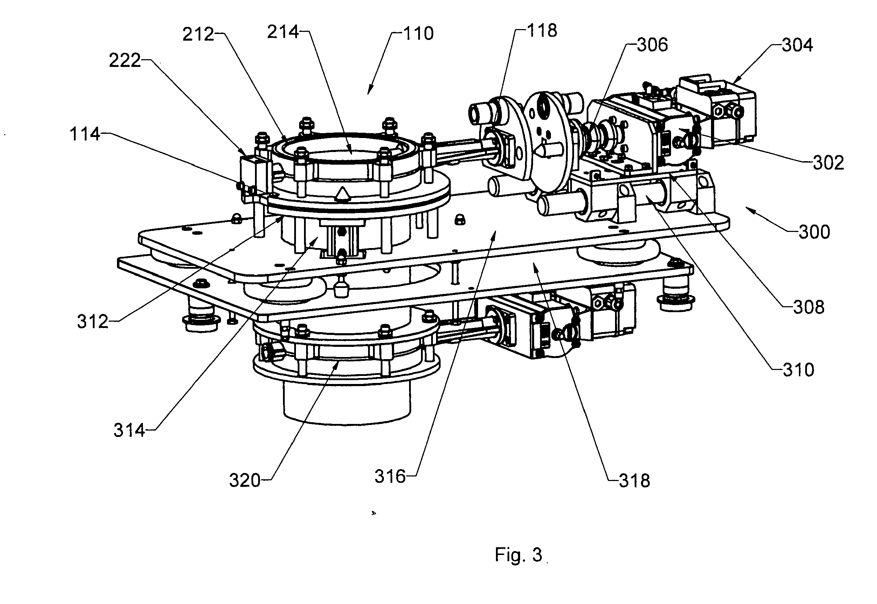

In Figur 3 ist eine beispielhafte Ausgestaltung des an der Entleerstation befestigten Übergangsstücks 300 zum Schüttgut-Container 100 zu entnehmen, wobei dieses hier im Kontakt mit der Dosierklappe 110 des Schüttgut-Containers 100 dargestellt ist. Man erkennt wieder die Dosierklappe 110 mit dem Ringflansch 114, Dichtring 212 und Klappenscheibe 214 sowie das die Antriebsachse umhüllende Anschlusselement 118. Der Kugelvibrator 222 ist hier bereits angebracht dargestellt, der Befestigungsmechanismus - in der hier beschriebenen Ausführungsform in Gestalt des Gewindes 218 und des Gegengewindes 216 - ist aber vorzugsweise so ausgelegt, dass er auch erst nachträglich angebracht werden kann.

Die Fortsetzung des Überganges in Richtung auf den Schüttgut-Container ist in Figur 3 nicht dargestellt, sie ergibt sich aber direkt aus der Figur 1.

Unterhalb des Ringflansches 114 schließt sich das Übergangsstück 300 an, und zwar mit einem weiteren Ringflansch 312, der einerseits einen flächig deckenden Übergang zum Ringflansch 114 des Schüttgut-Containers 100 erzeugt und andererseits mit der Durchführung 314 fest verbunden ist, die eine erste Platte 316 und eine zweite Platte 318 des Übergangsstückes 300 durchstößt und auf ihrer Unterseite eine Verschlusseinheit 320 aufweist. Die erste und zweite Platte 316 und 318 sind gegeneinander schwingungsfähig gelagert. Auf der ersten Platte 316 ist weiterhin ein Schienensystem 310 angeordnet, das einen Schlitten 308 trägt, auf dem die Antriebseinheit 302 für die Verstellung der Klappenscheibe 214 und der Weggeber 304 zur Anzeige der aktuellen Klappenposition angeordnet sind. Durch Verfahren des Schlittens 308 auf dem Schienensystem 312 lässt sich nach dem Aufsetzen des Schüttgut-Containers 100 über die Kupplungseinheit 306 der Anschluss an die in Figur 3 nicht erkennbare Antriebsachse 116 herstellen, so dass danach das Verstellen der Position der Klappenscheibe 214 möglich ist und diese Position mit Hilfe des Weggebers 304 auslesbar ist.

Aus dieser beispielhaften Darstellung wird deutlich, dass erfindungsgemäß die gesamte Ansteuerung der Dosierklappe an der Entleerstation fixiert ist und lediglich die Klappe selbst am Schüttgut-Container vorzusehen ist.

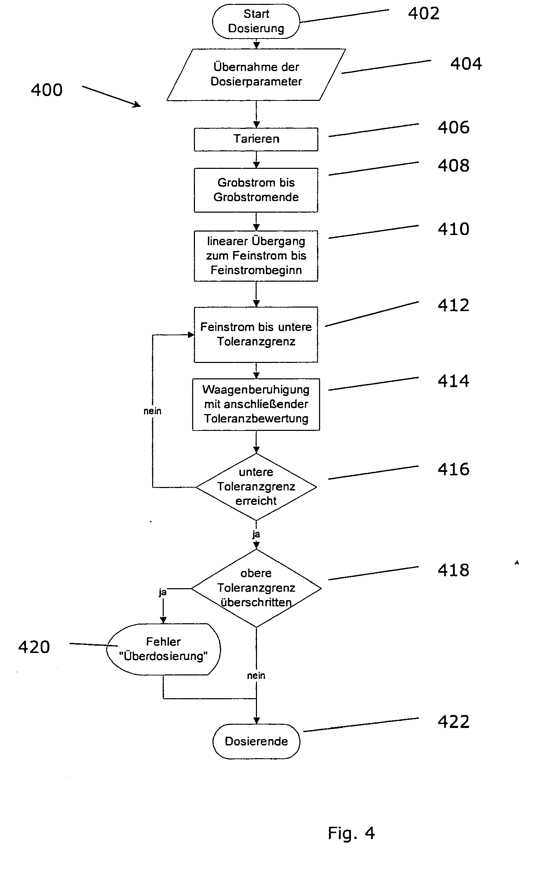

Figur 4 zeigt exemplarisch den Verlauf eines besonders vorteilhaften erfindungsgemäßen Dosierverfahrens als Flussdiagramm. Der Durchführung dieses Verfahrens vorgeschaltet sind stets die Schritte des Aufsetzens des Schüttgut-Containers 100 auf die Entleerstation und des Verbindens der Dosierklappe 110 mit den an der Entleerstation vorgesehenen Antriebs- und/oder Vibrationselementen; nach dem Abschluss des Dosierens wird in der Regel diese Verbindung wieder gelöst und der Schüttgut-Container von der Entleerstation abgenommen.

Nachdem der Schüttgut-Container auf die Entleerstation - vorzugsweise in einem vollautomatischen Prozess- aufgesetzt und angeschlossen wurde, kann der Start der Dosierung 402 erfolgen.

Der Abfüllprozess beginnt mit dem Schritt der Übernahme der Dosierparameter 404, die auf den Inhalt des Schüttgut-Containers sowie dessen Fließeigenschaften und die abzufüllende Menge abgestimmt sind und unter anderem die Zielmenge, die gewünschten Flussraten im Grob- und Feinstrombetrieb sowie Parameter für die Gestaltung des Übergangs zwischen Grob- und Feinstrombetrieb und Toleranzdaen umfassen können. Diese können im Operator-Panel eingegeben worden sein; es wäre aber auch die Übermittlung der Daten an die Steuerelektronik über einen Kontrollrechner oder durch Auslese eines am Schüttgut-Container vorgesehenen Datenträgers oder Transponders möglich.

Als nächstes wird im Schritt 406 das Tara-Gewicht des Gefäßes, in das das Schüttgut abgefüllt wird, bzw. bei Abzugsverwiegung das Gewicht des zu entnehmenden Gebindes bestimmt. Dieses Gewicht wird fortan von allen durch Wägung ermittelten und an die Steuerelektronik übermittelten Massendaten abgezogen.

Danach beginnt der Grobstromfluss 408, der andauert, bis die vorgegebene Gewichtsbedingung für das Grobstromende erfüllt ist.

Anschließend wird ein im Schritt 410 ein linearer Übergang vom Grobstrombetrieb mit hoher Materialflussrate und großer Öffnung der Dosierklappe zum Feinstrombetrieb mit kleinen Materialflussraten durchgeführt.

Im Feinstrombetrieb 412 verbleibt das System bis erstmals die Masse des abgefüllten Schüttgutes die als Dosierparameter vorgegebene untere Toleranzgrenze erreicht.

Nach dem Erreichen der unteren Toleranzgrenze wird im Schritt 414 die Dosierklappe 110 geschlossen und die Beruhigung der Waage abgewartet. Im Anschluss an diese Beruhigungszeit wird im Schritt 416 entschieden, ob das System in den Schritt 412 zurückzusetzen ist, weil die nach der Beruhigungszeit ausgelesene Masse wieder unter die untere Toleranzgrenze abgefallen ist, oder ob andernfalls zum Schritt 418, in dem überprüft wird, ob die obere Toleranzschwelle überschritten ist, weitergeleitet. Ist dies der Fall, wird im Schritt 420 ein Fehlersignal generiert; andernfalls das reguläre Dosierende 422 signalisiert.

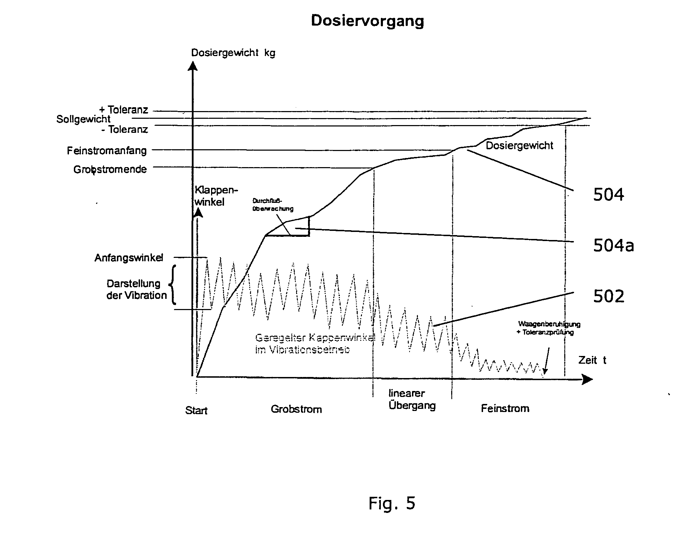

Den Verlauf des Dosiervorgangs, wie er bei Anwendung des hier beschriebenen Dosierverfahrens auftritt, illustriert die Figur 5 in Form eines Diagramms, in dem das Dosiergewicht und die als "Klappenwinkel" bezeichnete Öffnung der Klappe gegen die Zeit aufgetragen sind.

Das gemessene Bruttogewicht wird bei Dosierstart gespeichert und über den Dosierverlauf gemessen. Daraus werden das dosierte Gewicht und der aktuelle Durchfluss von Schüttgut ermittelt. Diese Daten werden der Steuerelektronik eingespeist, um auf ihrer Basis eine Anpassung der jeweiligen Klappensteuerung und ggf. ein Zuschalten eines Containerrüttlers zu ermöglichen.

Durch die Eingabe der stark materialabhängigen Dosierparameter, z.B. über das Operator Panel, über einen Kontrollrechner oder durch Auslesen eines am Stückgut-Container 100 vorgesehenen Datenträgers oder Transponders, werden die Dosierphasen Grob- und Feinstrom definiert und hier insbesondere die gewünschten Durchflusswerte von Material eingelernt. Dabei ist auch denkbar, dass nur das entsprechende Material hinreichend präzise spezifiziert wird und die zugehörigen Parameter dann aus einer Datenbank abgerufen werden.

Die beiden Umschaltpunkte werden durch die zu erreichenden Massenwerte, bezogen auf das dosierte Gewicht, für Grobstromende und den Feinstromanfang festgelegt. Sie werden als Abstand zum Sollwert der aus dem Schüttgut-Container 100 zu transferierenden Masse eingegeben.

Je nach Anforderung kann es notwendig werden, für jedes zu dosierende Produkt getrennt Dosierparameter zu ermitteln und einzustellen. Die Anforderungen an die Dosierung reichen von schneller bis hoch genauer Dosierung.

Die für den Übergang von Grob- zu Feinstromdosierung notwendige Bewegung der Klappenscheibe 214 wird automatisch errechnet. Die Umschaltpunkte sind in Verbindung mit den Durchflüssen so zu wählen, dass für die Dosierautomatik genügend Reaktionszeit verbleibt, um nach der Umschaltung von Grob- auf Feinstrom den definierten Durchfluss einzustellen.

Der aktuelle Klappenwinkel wird durch ein Wegmesssystem gemessen und automatisch in Abhängigkeit von dem vorgegebenen und dem tatsächlichen Durchfluss eingestellt.

Beim Start der Entleerung ist das Dosiergewicht, also das Gesamtgewicht des Behälters abzüglich des bestimmten Taragewichtes, 0. Die Steuerelektronik versucht, durch Öffnen des Klappenwinkels den Durchsatz an den gewünschten Wert für den Grobstrombereich anzupassen und öffnet die Klappenscheibe 214 der Dosierklappe 110, was an dem kontinuierlichen Anstieg des Klappenwinkels in Figur 5 erkennbar ist.

Um das langsame Antasten an den Grobstrom zu Beginn der Dosierung zu verkürzen, kann man aber auch einen Anfangswinkel festlegen, in diesem Fall würde in Figur 5 die Darstellung des Klappenwinkels gegen die Zeit nicht im Ursprung des Graphen linear zu steigen beginnen, sondern sehr steil bis sprunghaft an einen Punkt auf der Klappenwinkel-Achse, der diesem Anfangswinkel entspricht, bewegt.

Ist dieser Wert erreicht, beginnt das System mit Vibrationen der Klappenscheibe 214, was man den Schwankungen in der Klappenwinkel-Kurve 502 entnimmt.

Das Vibrieren der Dosierklappe während der Dosierung fördert den Dosieraustrag und ermöglicht das Einstellen von kleinen Öffnungswinkeln. Dadurch kann ein Durchschießen des Materials bei gut fließenden Produkten am Ende der Dosierung verhindert und durch intelligente Regelung von Dosierwinkel und Vibration eine hohe Dosiergenauigkeit erreicht werden.

Bei weiterer Betrachtung der Klappenwinkelkurve 502 in Figur 5 fällt auf, dass diese nach dem Öffnen der Klappe im Mittel leicht abfällt. Dies liegt daran, dass die reale Betrachtung eines Materialdurchsatzes immer eine zeitliche Mittelung voraussetzt, daher ist der zunächst angesteuerte Klappenöffnungswinkel, um den herum die durch die Vibration induzierte Oszillation des Öffnungswinkels erfolgt, etwas zu groß, was von der Steuerung korrigiert wird.

In der Praxis wird kein konstanter Materialdurchsatz erreicht, wie man der Dosiergewichtskurve 504 in Figur 5 leicht entnimmt. Beispielsweise weicht im Abschnitt 504a der Dosiergewichtskurve der Anstieg der Kurve und damit die Zunahme des Dosiergewichtes erheblich nach unten von dem Sollwert ab. An der Klappenwinkelkurve 502 erkennt man in Figur 5 das Gegensteuern der Steuerelektronik, da der Mittelwert dieser Kurve kurz nach dem Zeitpunkt, zu dem der Durchfluss abzusinken beginnt, anzusteigen beginnt.

In einer solchen Situation kann ein etwaig vorhandener, Containerrüttler durch die Steuerelektronik dazugeschaltet werden. Bei schlecht fließenden Produkten kann aber auch für die gesamte Dosierzeit der Containerrüttler dazugeschaltet werden. Dieser dann vorteilhafterweise im Puls-Pause-Betrieb, im Automatikbetrieb kann er -wie soeben erläutert- entsprechend dem Durchfluss angesteuert werden.

Hat das Dosiergewicht die für das Grobstromende festgesetzte Zielmasse erreicht, wird die Öffnung der Dosierklappe 110 in einem linearen Übergang in die für den Feinstrombereich vorbestimmte Position überführt; dementsprechend wird der Anstieg des Dosiergewichtes reduziert. Dabei wird die Vibration weiter aufrechterhalten.

Ist das den Feinstromanfang festsetzende Dosiergewicht erreicht, wird der Materialdurchfluss weiter verlangsamt. Dazu kann es auch sinnvoll sein, die Amplitude der Klappenvibrationen zu reduzieren. Zu einer erstmaligen Unterbrechung des Materialflusses, die auch mit dem Aussetzen der Vibrationen und dem Schließen der Dosierklappe 110 einhergeht, kommt es, sobald das von der Waage an die Steuerelektronik weitergeleitete Gewichtssignal das erste Mal die vorgegebene untere Toleranzschwelle erreicht.

Eine fest hinterlegte Waagenberuhigungszeit wird nach dem Erreichen der unteren Toleranzgrenze gestartet und nach deren Ablauf eine Toleranzbewertung vorgenommen. Wird die untere Toleranzgrenze nach deren Ablauf wieder unterschritten, wird weiter dosiert. Wird die obere Toleranzgrenze überschritten, wird eine Fehlermeldung abgesetzt. Befindet sich nach der Beruhigungszeit das Gewicht immer noch zwischen den Toleranzgrenzen, ist die Dosierung beendet.

### Bezugszeichenliste 02. April 2008

- 100: Schüttgut-Container
- 102: Materialaufnahmebehälter
- 104: trichterartig zulaufende Wände
- 106: Gerüst
- 106a: unterer Abschnitt des Gerüstes
- 106b: oberer Abschnitt des Gerüstes
- 108: Befüllöffnung
- 110: Dosierklappe
- 112: Ringflansch
- 114: Ringflansch
- 116: Antriebsachse
- 118: Anschlusselement

- 212: Dichtring
- 214: Klappenscheibe
- 216: Gegengewinde
- 218: Gewinde
- 220: Durchführung
- 222: Kugelvibrator
- 224: Verbindungsachse
- 226: Welle der Klappenscheibe

- 300: Übergangsstück
- 302: Antriebseinheit
- 304: Weggeber
- 306: Kupplungseinheit
- 308: Schlitten
- 310: Schienensystem
- 312: Ringflansch
- 314: Durchführung
- 316: erste Platte
- 318: zweite Platte
- 320: Verschlusseinheit

- 400: Dosierverfahren
- 402: Start der Dosierung
- 404: Übernahme der Dosierparameter
- 406: Tarieren
- 408: Grobstromfluss
- 410: Übergang zum Feinstromfluss
- 412: Feinstromfluss bis zum Erreichen der unteren Toleranzgrenze
- 414: Waagenberuhigung mit anschließender Toleranzbewertung
- 416: Entscheidung, ob untere Toleranzgrenze erreicht ist
- 418: Entscheidung, ob obere Toleranzgrenze überschritten ist
- 420: Fehlermeldung
- 422: Dosierende

- 502: Klappenwinkel-Kurve
- 504: Dosiergewicht-Kurve
- 504a: Abschnitt der Dosiergewichts-Kurve

## Patentansprüche

1. Entleerstation für Schüttgut-Container und zugehöriger Schüttgut-Container (100), wobei
• der Schüttgut-Container (100) zumindest einen Materialaufnahmebehälter (102) mit Befüllöffnung (108) und Dosierklappe (110) umfasst
• die Entleerstation eine Antriebseinheit (302) für die Dosierklappe (110) umfasst, und
• die Entleerstation zumindest eine Steuerelektronik zur Steuerung der Antriebseinheit (302) der Dosierklappe (110) mit Klappenscheibe (214), wobei die Steuerelektronik in Signalkommunikation mit der Antriebseinheit (302) für die Dosierklappe (110) steht, aufweist,
wobei die Antriebseinheit (302) für die Dosierklappe (110) nur während des Abfüll- oder Entleervorgangs an die Dosierklappe (110) des Schüttgut-Containers (100) angekoppelt ist
**dadurch gekennzeichnet, dass** an der Entleerstation ein Schienensystem (310) vorgesehen ist, auf dem ein Schlitten (308) verschiebbar angeordnet ist, wobei der Schlitten (308) zumindest die Antriebseinheit (302) und eine Kupplungseinheit (306) trägt und so verschoben werden kann, dass die Kupplungseinheit (306) eine Antriebsachse (116) der Dosierklappe (110) mit der Antriebseinheit (302) verbindet.

2. Entleerstation für Schüttgut-Container und zugehöriger Schüttgut-Container (100) nach Anspruch 1,
**dadurch gekennzeichnet, dass** an der Entleerstation oder am Schüttgut-Container (100) ein Vibrator vorgesehen ist, mittels dessen die Klappenscheibe (214) in Vibration versetzbar ist.

3. Entleerstation für Schüttgut-Container und zugehöriger Schüttgut-Container (100) nach Anspruch 2,
**dadurch gekennzeichnet, dass** der Vibrator ein Kugelvibrator (222) ist.

4. Entleerstation für Schüttgut-Container und zugehöriger Schüttgut-Container (100) nach Anspruch 3,
**dadurch gekennzeichnet, dass** der Kugelvibrator (222) mit einer Frequenz zwischen 80 und 500 Hz schwingt.

5. Entleerstation für Schüttgut-Container und zugehöriger Schüttgut-Container (100) nach einem der Ansprüche 2 bis 4,
**dadurch gekennzeichnet, dass** der Kugelvibrator mittels einer lösbaren Verbindung an einer Welle der Klappenscheibe (214) befestigt ist und keinen festen Kontakt zum Gehäuse und/oder dem Dichtring (212) der Dosierklappe (110) hat.

6. Entleerstation für Schüttgut-Container und zugehöriger Schüttgut-Container (100) nach einem der vorstehenden Ansprüche,
**dadurch gekennzeichnet, dass** der Entleereinrichtung weiter eine Waage zugeordnet ist, die mit der Steuerelektronik derart in Signalkommunikation steht, dass ihre Messdaten der Steuerelektronik zur Steuerung der Antriebseinheit (302) der Dosierklappe zugeleitet werden.

7. Entleerstation für Schüttgut-Container und zugehöriger Schüttgut-Container (100) nach einem der vorstehenden Ansprüche,
**dadurch gekennzeichnet, dass** ein Weggeber (304) zur Überwachung der aktuellen Stellung der Klappenscheibe (214) der Dosierklappe (110) an der Klappenscheibe oder an der Antriebseinheit (302) vorgesehen ist, der zumindest während des Entleervorganges in Signalkommunikation mit der Steuerelektronik steht.

8. Entleerstation für Schüttgut-Container und zugehöriger Schüttgut-Container (100) nach einem der vorstehenden Ansprüche,
**dadurch gekennzeichnet, dass** an der Entleerstation ein Containerrüttler vorgesehen ist.

9. Entleerstation für Schüttgut-Container und zugehöriger Schüttgut-Container (100) nach einem der vorstehenden Ansprüche,
**dadurch gekennzeichnet, dass** der Schüttgut-Container (100) ein Gerüst (106) zur Stützung des Materialaufnahmebehälters (102) aufweist.

10. Entleerstation für Schüttgut-Container und zugehöriger Schüttgut-Container (100) nach Anspruch 9,
**dadurch gekennzeichnet, dass** ein unterer Abschnitt des Gerüstes (106a) so ausgeformt ist, dass er durch Anpassung an die Form des oberen Bereichs der Entleerstation ein passgenaues Aufsetzen und/oder Einrasten des Schüttgut-Containers (100) auf der Entleerstation erlaubt und dass ein oberer Abschnitt des Gerüstes (106b) so ausgeformt ist, dass er durch Anpassung an die Form des unteren Abschnitts des Gerüstes (106a) das passgenaues Aufsetzen und/oder Einrasten von Schüttgut-Containern (100) aufeinander erlaubt.

11. Verfahren zur kontrollierten Entleerung von Schüttgut-Containern, umfassend mindestens die Schritte
1) Aufsetzen des Schüttgut-Containers (100) auf die Entleerstation
2) Initiieren eines Entleervorgangs
3) Wiederholtes Kontrollieren ob eine Bedingung zum Abbruch des Entleervorgangs erfüllt ist
4) Beenden des Entleervorgangs wenn die Bedingung zum Abbruch des Entleervorgangs erfüllt ist
5) Entfernen des Schüttgut-Containers (100)
**dadurch gekennzeichnet, dass** zusätzlich zwischen den Schritten 1) und 2) der Schritt des Verbindens der Antriebseinheit (302) mit der Dosierklappe (110) eingefügt ist und zwischen den Schritten 4) und 5) der Schritt des Lösens der Antriebseinheit (302) von der Dosierklappe (110) eingefügt ist, wobei das Verbinden und Lösen der Antriebseinheit (302) mittels eines auf einem Schienensystem (310) verschiebbar angeordneten Schlittens (308), der zumindest die Antriebseinheit 8302) und eine Kupplungseinheit (306) trägt, durchgeführt wird.

12. Verfahren zur kontrollierten Entleerung von Schüttgut-Containern nach Anspruch 11,
**dadurch gekennzeichnet, dass** die Dosierklappe (110) während des Entleervorgangs zumindest zeitweise in Vibration versetzt wird.

13. Verfahren zur kontrollierten Entleerung von Schüttgut-Containern nach Anspruch 11 oder 12,
**dadurch gekennzeichnet, dass** die Schritte 2) bis 4) des Entleervorgangs von einer Steuerelektronik auf die Einhaltung von materialabhängigen Dosierparametern überwacht werden.

14. Verfahren zur kontrollierten Entleerung von Schüttgut-Containern nach Anspruch 13,
**dadurch gekennzeichnet, dass** die materialabhängigen Dosierparameter neben einem ersten Gewicht als abzufüllendem Sollgewicht mindestens einen Materialsolldurchsatz umfassen.

15. Verfahren zur kontrollierten Entleerung von Schüttgut-Containern nach Anspruch 14,
**dadurch gekennzeichnet, dass** die Steuerelektronik bei Unterschreiten des Materialsolldurchsatzes die Öffnung der Dosierklappe (110) vergrößert und bei Überschreiten des Materialsolldurchsatzes die Öffnung der Dosierklappe (110) verkleinert.

16. Verfahren zur kontrollierten Entleerung von Schüttgut-Containern nach Anspruch 15,
**dadurch gekennzeichnet, dass** die materialabhängigen Dosierparameter den ersten Materialsolldurchsatz als Grobstromdurchsatz und einen zweiten Materialsolldurchsatz als Feinstromdurchsatz sowie ein zweites Gewicht als Grobstromendgewicht und ein drittes Gewicht als Feinstromanfangsgewicht umfassen,
wobei die Steuerelektronik bis zum Erreichen des Grobstromendgewichtes den Materialdurchsatz durch Änderung der Öffnung der Dosierklappe (110) an den Grobstromdurchsatz annähert und zwischen Erreichen des Grobstromendgewichtes und Erreichen des Feinstromanfangsgewichtes die Öffnung der Dosierklappe (110) linear auf den für das Erzielen des Feinstromdurchsatzes notwendigen Wert reduziert wird.

17. Verfahren zur kontrollierten Entleerung von Schüttgut-Containern nach einem der Ansprüche 13 bis 16,
**dadurch gekennzeichnet, dass** als zusätzliche Dosierparameter eine obere und eine untere Toleranzschwelle übergeben werden, wobei die Steuerelektronik wenn das Dosiergewicht die obere Toleranzschwelle überschreitet eine Fehlermeldung ausgibt und wenn das Dosiergewicht die untere Toleranzsschwelle überschreitet der Entleervorgang durch die Steuerelektronik unterbrochen wird, um die Ausschwingzeit der Waage abzuwarten und nur dann fortgesetzt wird, wenn nach Abwarten der Ausschwingzeit wieder ein Dosiergewicht unterhalb der unteren Toleranzschwelle vorliegt.

## Claims

1. Emptying station for bulk material containers with accompanying bulk material container (100),
• the bulk material container (100) having at least one material receiving reservoir (102) with filling opening (108) and dosing flap (110)
• the emptying station having a drive unit (302) for the dosing flap (110) and
• the emptying station having at least one control electronics for controlling the drive unit (302) of the dosing flap (110) with flap disk (214), where the control electronics stays in signal communication with the drive unit (302) for the dosing flap (110),
the drive unit (302) for the dosing flap (110) being coupled to the dosing flap (110) of the bulk material container (100) only during the filling or emptying process, **characterized in that** a rail system (310), on which a carriage (308) is displaceably arranged, is provided at the emptying station, wherein the carriage (308) carries at least the drive unit (302) and a coupling unit (306) and is displaceable, such that the coupling unit (306) connects a drive axle (116) of the dosing flap (110) with the drive unit (302).

2. Emptying station for bulk material containers with accompanying bulk material container (100) according to claim 1, **characterized in that** a vibrator, by means of which the flap disk (214) can be set into vibration, is provided at the emptying station or on the bulk material container (100).

3. Emptying station for bulk material containers with accompanying bulk material container (100) according to claim 2, **characterized in that** the vibrator is a ball vibrator (222).

4. Emptying station for bulk material containers with accompanying bulk material container (100) according to claim 3, **characterized in that** the ball vibrator (222) vibrates at a frequency of 80 - 500 Hz.

5. Emptying station for bulk material containers with accompanying bulk material container (100) according to any one of claims 2 to 4, **characterized in that** the ball vibrator is fastened by means of a releasable connection to a shaft of the flap disk (214) and not to the fixed contact housing and/or the sealing ring (212) of the dosing flap (110).

6. Emptying station for bulk material containers with accompanying bulk material container (100) according to any one of the above claims, **characterized in that** a scale, which stays in signal communication with the control electronics, is also assigned to the emptying device, such that its measuring data are fed to the control electronics for controlling the drive unit (302) of the dosing flap.

7. Emptying station for bulk material containers with accompanying bulk material container (100) according to any one of the above claims, **characterized in that** a displacement sensor (304) is provided on the flap disk or on the drive unit (302) for monitoring the actual position of the flap disk (214) of the dosing flap (110), which at least during the emptying process stays in signal communication with the control electronics.

8. Emptying station for bulk material containers with accompanying bulk material container (100) according to any one of the above claims, **characterized in that** a container-vibrator is provided at the emptying station.

9. Emptying station for bulk material containers with accompanying bulk material container (100) according to any one of the above claims, **characterized in that** the bulk material container (100) comprises a stand (106) for supporting the material receiving reservoir (102).

10. Emptying station for bulk material containers with accompanying bulk material container (100) according to claim 9, **characterized in that** a lower portion of the stand (106a) is formed, such that it allows an exactly fitting placement and/or locking of the bulk material container (100) on the emptying station by adaptation to the shape of the upper portion of the emptying station and **in that** an upper portion of the stand (106b) is formed, such that it permits the exactly fitting placement and/or locking of bulk material containers (100) on each other by adaptation to the shape of the lower portion of the stand(106a).

11. Method for the controlled emptying of bulk material containers, comprising at least the steps
1) Placing the bulk material container (100) on the emptying station
2) Initiating an emptying process
3) Repeated checking whether a condition to abort the emptying process is satisfied
4) Terminating the emptying process if the condition to abort the emptying process is satisfied
5) Removing the bulk material container (100)
**characterized in that**, in addition, the step of connecting the drive unit (302) to the dosing flap (110) is inserted between steps 1) and 2) and the step of disconnecting the drive unit (302) from the dosing flap (110) is inserted between steps 4) and 5), the drive unit (302) being connected and disconnected by means of a carriage (308), displaceably arranged on a rail system (310), which carries at least the drive unit (302) and a coupling unit (306).

12. Method for controlled emptying of bulk material containers according to claim 11, **characterized in that** the dosing flap (110) is set into vibration during the emptying process at least occasionally.

13. Method for controlled emptying of bulk material containers according to claim 11 or 12, **characterized in that** steps 2) to 4) of the emptying process are monitored by a control electronics to ensure compliance with material-contingent dosing parameters.

14. Method for controlled emptying of bulk material containers according to claim 13, **characterized in that** the material-contingent dosing parameters, additionally to a first weight as target weight to be filled, comprise at least a material target throughput.

15. Method for controlled emptying of bulk material containers according to claim 14, **characterized in that** the control electronics enlarges the opening of the dosing flap (110) if there is a shortfall in the material target throughput and reduces the opening of the dosing flap (110) if the material target throughput is exceeded.

16. Method for controlled emptying of bulk material containers according to claim 15, **characterized in that** the material-contingent dosing parameters comprise the first material target throughput as rough flow throughput and a second material target throughput as fine flow throughput, as well as a second weight as rough flow end weight and a third weight as fine flow initial weight, wherein the control electronics, until the rough flow end weight has been reached, approximates the material throughput to the rough flow throughput by altering the opening of the dosing flap (110) and, between reaching the rough flow end weight and reaching the fine flow initial weight, the opening of the dosing flap (110) is reduced linearly to the value necessary for achieving the fine flow throughput.

17. Method for controlled emptying of bulk material containers according to any one of claims 13 to 16, **characterized in that** an upper and a lower tolerance threshold are given as additional dosing parameters, wherein the control electronics, if the dosing weight exceeds the upper tolerance threshold, sends out an error message and, if the dosing weight exceeds the lower tolerance threshold, the emptying process is interrupted by the control electronics, in order to await the settling time of the scale and is only resumed when, after awaiting the settling time, the dosing weight is again below the lower tolerance threshold.

## Revendications

1. Poste de vidange d'un conteneur de produits en vrac et conteneur de produits en vrac (100) associé, dans lesquels :
- le conteneur de produits en vrac (100) comprend au moins un réceptacle de réception de matériau (102) ayant une ouverture de remplissage (108) et un clapet doseur (110),
- le poste de vidange comprend une unité d'actionnement (302) du clapet doseur (110), et
- le poste de vidange comprend au moins une électronique de commande permettant de commander l'unité d'actionnement (302) du clapet doseur (110) avec un disque de clapet (214), cette électronique de commande étant en communication par signal avec l'unité d'actionnement (302) du clapet doseur (110),
- l'unité d'actionnement (302) du clapet doseur (110) n'étant couplée au clapet doseur (110) du conteneur de produits en vrac (100) que pendant le processus de remplissage ou le processus de vidange, **caractérisés en ce que**
sur le poste de vidange il est prévu un système de glissière (310) sur lequel un chariot (308) peut coulisser, ce chariot (308) portant au moins l'unité d'actionnement (302) et une unité d'accouplement (306) et peut être déplacé par coulissement de sorte que l'unité d'accouplement (306) relie un axe d'actionnement (116) du clapet doseur (110) avec l'unité d'actionnement (302).

2. Poste de vidange d'un conteneur de produits en vrac et conteneur de produits en vrac (100) associé conformes à la revendication 1,
**caractérisés en ce que**
sur le poste de vidange ou le conteneur de produits en vrac (100) il est prévu un vibreur permettant la mise en vibration du disque de clapet (214).

3. Poste de vidange d'un conteneur de produits en vrac et conteneur de produits en vrac (100) associé conformes à la revendication 2,
**caractérisés en ce que**
le vibreur est un vibreur à billes (222).

4. Poste de vidange d'un conteneur de produits en vrac et conteneur de produits en vrac (100) associé conformes à la revendication 3,
**caractérisés en ce que**
le vibreur à billes (222) vibre à une fréquence comprise entre 80 et 500 Hz.

5. Poste de vidange d'un conteneur de produits en vrac et conteneur de produits en vrac (100) associé conformes à l'une des revendications 2 à 4,
**caractérisés en ce que**
le vibreur à billes est fixé par une liaison amovible à un arbre du disque de clapet (214) et n'a aucun contact permanent avec le boitier et/ou la bague d'étanchéité (212) du clapet doseur (110).

6. Poste de vidange d'un conteneur de produits en vrac et conteneur de produits en vrac (100) associé conformes à l'une des revendications précédentes,
**caractérisés en ce qu'**
au dispositif de vidange est en outre associée une balance qui est en communication par signal avec l'électronique de commande de sorte que ses données de mesure soient transmises à l'électronique de commande pour permettre de commander l'unité d'actionnement (302) du clapet doseur.

7. Poste de vidange d'un conteneur de produits en vrac et conteneur de produits en vrac (100) associé conformes à l'une des revendications précédentes,
**caractérisés en ce qu'**
il est prévu sur le disque de clapet ou sur l'unité d'actionnement (302), un transmetteur de déplacement (304) pour permettre de surveiller la position actuelle du disque de clapet (214) du clapet doseur (110), qui est en communication par signal avec l'électronique de commande au moins pendant le processus de vidange.

8. Poste de vidange d'un conteneur de produits en vrac et conteneur de produits en vrac (100) associé conformes à l'une des revendications précédentes,
**caractérisés en ce que**
sur le poste de vidange il est prévu un secoueur du conteneur.

9. Poste de vidange d'un conteneur de produits en vrac et conteneur de produits en vrac (100) associé conformes à l'une des revendications précédentes,
**caractérisés en ce que**
le conteneur de produits en vrac (100) comporte une ossature (106) de support du réceptacle de réception de matériaux (102).

10. Poste de vidange d'un conteneur de produits en vrac et conteneur de produits en vrac (100) associé conformes à la revendication 9,
**caractérisés en ce que**
la partie inférieure de l'ossature (106a) est conformée pour permettre par adaptation à la forme de la zone supérieure du poste de vidange la mise en place exacte et précise et/ou l'encliquetage du conteneur de produits en vrac (100) sur ce poste de vidange, et la partie supérieure de l'ossature (106b) est conformée pour permettre, par adaptation à la forme de la partie inférieure de l'ossature (106a) la mise en place exacte et précise et/ou l'encliquetage de conteneurs de produits en vrac (100) les uns sur les autres.

11. Procédé pour permettre une vidange contrôlée de conteneurs de produits en vrac comprenant au moins les étapes consistant à :
1) mettre en place le conteneur de produits en vrac (100) sur le poste de vidange,
2) débuter un processus de vidange,
3) contrôler de manière répétée si une condition d'interruption du processus de vidange est remplie,
4) terminer le processus de vidange lorsque la condition d'interruption du processus de vidange est remplie,
5) extraire le conteneur de produits en vrac (100),
**caractérisé en ce qu'**
entre les étapes 1) et 2) est en outre insérée une étape consistant à relier l'unité d'actionnement (302) au clapet doseur (110) et entre les étapes 4) et 5) est en outre insérée une étape consistant à dégager l'unité d'actionnement (302) du clapet doseur (110), la liaison et le dégagement de l'unité d'actionnement (302) étant effectués au moyen d'un chariot (308) monté coulissant sur un système de glissière (310) qui porte au moins l'unité d'actionnement (302) et une unité d'accouplement (306).

12. Procédé pour permettre une vidange contrôlée de conteneurs de produits en vrac conforme à la revendication 11,
**caractérisé en ce que**
le clapet doseur (110) est mis en vibration au moins par intermittence pendant le processus de vidange.

13. Procédé permettant une vidange contrôlée de conteneurs de produits en vrac conforme à la revendication 11 ou 12,
**caractérisé en ce que**
les étapes 2) à 4) du processus de vidange sont surveillées par une électronique de commande pour vérifier que des paramètres de dosage dépendant du matériau soit respectés.

14. Procédé permettant une vidange contrôlée de conteneurs de produits en vrac conforme à la revendication 13,
**caractérisé en ce que**
les paramètres de dosage dépendant du matériel comprennent outre un premier poids constituant un poids de consigne de décharge, au moins un débit de matériau de consigne.

15. Procédé permettant une vidange contrôlée de conteneurs de produits en vrac conforme à la revendication 14,
**caractérisé en ce que**
lorsque le débit de matériau devient inférieur au débit de consigne, l'électronique de commande augmente l'ouverture du clapet doseur (110) et lorsque le débit de matériau devient supérieur au débit de consigne, l'électronique de commande réduit l'ouverture du clapet doseur (110).

16. Procédé permettant une vidange contrôlée de conteneurs de produits en vrac conforme à la revendication 15,
**caractérisé en ce que**
les paramètres de dosage dépendant du matériau comprennent le premier débit de consigne qui constitue un débit de courant grossier et un second débit de consigne qui constitue un débit de courant fin ainsi qu'un second poids qui constitue un poids final de courant grossier et un troisième poids qui constitue un poids initial de courant fin, l'électronique de commande approchant jusqu'à avoir atteint le poids final de courant grossier, le débit de matériau, du débit de courant grossier en modifiant l'ouverture du clapet doseur (110), et réduisant linéairement entre l'atteinte du poids final de courant grossier et l'atteinte du poids initial de courant fin l'ouverture du clapet doseur (110) à la valeur nécessaire pour l'obtention du débit de courant fin.

17. Procédé de vidange contrôlée de conteneurs de produits en vrac conforme à l'une des revendications 13 à 16,
**caractérisé en ce qu'**
on fournit entant que paramètres de dosage supplémentaires un seuil de tolérance supérieur et un seuil de tolérance inférieur, l'électronique de commande délivrant un message de défaut lorsque le poids de dosage dépasse le seuil de tolérance supérieur, et, lorsque le poids de dosage dépasse le seuil de tolérance inférieur, le processus de vidange est interrompu par l'électronique de commande pour attendre la durée d'amortissement de l'oscillation de la balance et n'est poursuivi que lorsqu'après avoir attendu cette durée d'amortissement le poids de dosage est à nouveau situé au-dessous du seuil de tolérance inférieur.
